# EUROPEAN PATENT APPLICATION

(11) **EP 4 332 209 A1**
(43) Date of publication of application: **06.03.2024**
(21) Application number: 22795368.4
(22) Date of filing: 18.03.2022
(51) Int. Cl.: C12M 1/00, G01N 35/04

(54) **DISPENSING DEVICE AND ANALYTE PROCESSING/MEASURING SYSTEM**

(30) Priority: 28.04.2021 JP 2021076118
(71) Applicant: Universal Bio Research Co., Ltd., Matsudo-shi Chiba 271-0064 (JP)
(72) Inventor: TAJIMA Hideji, Matsudo-shi, Chiba 271-0064 (JP)
(74) Representative: J A Kemp LLP
(86) International application number: PCT/JP2022/012830
(87) International publication number: WO 2022/230448

(57) **Abstract**

A dispensing device 400 includes a plurality of dispensing nozzles arranged at predetermined intervals in x and y directions, a dispensing body 430 configured to support the plurality of dispensing nozzles, a mounting body 144 configured to allow a plurality of dispensing tips 142 to be mounted on the mounting body 144 at the predetermined intervals in the x and y directions, an attaching mechanism 432, 144b configured to attach the mounting body 144, on which the plurality of dispensing tips 142 are mounted, to the plurality of dispensing nozzles to install the plurality of dispensing tips 142 on the plurality of dispensing nozzles, a removing mechanism configured to remove the plurality of dispensing tips and the mounting body 144 from the plurality of dispensing nozzles, and a control unit configured to control operations of the plurality of dispensing nozzles, the attaching mechanism, and the removing mechanism.

## Description

### Technical Field

The present invention relates to a dispensing device in which a plurality of dispensing tips can be collectively attached, and to a specimen processing and measuring system including the dispensing device.

### Background Art

For detection of pathogens, such as viruses, the PCR method is used, which has become widespread with the development of genetic engineering, and which makes use of polymerase chain reaction (PCR). A specimen (saliva, nasopharyngeal mucus, or the like) containing a pathogen is taken with a commercially available sampling kit, a nucleic acid (DNA or RNA) is extracted from the specimen, the nucleic acid is amplified by the PCR method, and the pathogen is then detected based on the amplified nucleic acid. The world has been exposed to the new coronavirus (COVID-19) pandemic since the end of 2019. The PCR method has been used for detecting COVID-19.

Although the PCR method is performed mainly by manual handling, manual handling not only has difficulties in continuously performing a large amount of inspection processing, but also has the possibility of erroneous operations and contamination occurring in processing steps.

In performing the PCR method, a specimen is processed by using a microplate or a PCR plate having a plurality of wells (96 wells, for example). Dispensing nozzles mounted with dispensing tips are used for dispensing (suctioning, discharging) specimens, solutions, or reagents into the wells. The plurality of wells are arranged at predetermined intervals on the plane (x and y directions) of the microplate or the PCR plate and hence, it is possible to collectively perform dispensing by using a plurality of dispensing nozzles arranged corresponding to the number of wells. As shown in Figures 1 and 2 of Patent Literature 1, for example, a dispensing head device 10 includes a plurality of dispensing nozzles 16 arranged at predetermined intervals on a plane. In the dispensing head device 10, a plurality of dispensing tips 18 are installed on the plurality of dispensing nozzles 16 to perform dispensing into a plurality of wells 4a of microplates 4.

### Citation List

### Patent Literature

Patent Literature 1: Japanese Patent Laid-Open No. 2006-105754

### Summary of Invention

### Technical Problem

Usually, each dispensing tip is installed on a dispensing nozzle by press-fitting the lower end portion of the dispensing nozzle with an elastic member, such as an O-ring, into the upper end opening portion of the dispensing tip. To prevent leakage of liquid or gas from a gap formed between the dispensing nozzle and the dispensing tip and to prevent the dispensing tip from falling off the dispensing nozzle when the dispensing nozzle dispenses liquid, such as a specimen or a reagent, the lower end portion of the dispensing nozzle is press-fitted into the upper end opening portion of the dispensing tip with a relatively large force in such a way as to be sufficiently brought into close contact with the upper end opening portion of the dispensing tip.

To collectively press-fit the plurality of dispensing tips arranged at predetermined intervals on a plane into the plurality of dispensing nozzles, it is necessary to apply a substantially uniform force to the entire plane from the normal direction corresponding to the number of sets of dispensing tips and the number of sets of dispensing nozzles. It is difficult to apply such a force to a plurality of sets of dispensing tips and a plurality of sets of dispensing nozzles.

Each dispensing nozzle is provided with an elastic member, such as an O-ring, to improve close contact between the dispensing nozzle and the dispensing tip. After attaching and removing the dispensing tip to and from the dispensing nozzle is repeated, the elastic member deteriorates, thus generating a risk that liquid or gas may leak from a gap formed between the dispensing nozzle and the dispensing tip or the dispensing tip may fall off the dispensing nozzle. To prevent such a situation, it is necessary to periodically replace the elastic member. However, a plurality of dispensing nozzles arranged at predetermined intervals on a plane as described in Patent Literature 1 requires replacement of the elastic members, such as O-rings, after individual dispensing nozzles are removed from the dispensing device, thus requiring a large amount of effort in performing maintenance of the dispensing nozzles.

Therefore, an object of the present invention to provide a dispensing device in which a plurality of dispensing tips can be collectively attached to a plurality of dispensing nozzles, and to provide a specimen processing and measuring system including the dispensing device. Alternatively, it is an object of the present invention to provide a dispensing device in which, in collectively attaching a plurality of dispensing tips to a plurality of dispensing nozzles, elastic members of the plurality of dispensing nozzles are less likely to deteriorate and the plurality of dispensing nozzles can be easily attached, and to provide a specimen processing and measuring system including the dispensing device.

### Solution to Problem

Respective aspects of the present invention have the following configurations.
[Aspect 1]
   A dispensing device including a plurality of dispensing nozzles arranged at a predetermined interval in a first direction and a second direction, the dispensing device including:
   a dispensing body configured to support the plurality of dispensing nozzles;
   a mounting body configured to allow a plurality of dispensing tips to be mounted on the mounting body at the predetermined interval in the first direction and the second direction;
   an attaching mechanism configured to attach the mounting body, on which the plurality of dispensing tips are mounted, to the dispensing body to install the plurality of dispensing tips on the plurality of dispensing nozzles;
   a removing mechanism configured to remove the mounting body, on which the plurality of dispensing tips are mounted, from the dispensing body; and
   a control unit configured to control operations of the plurality of dispensing nozzles, the attaching mechanism, and the removing mechanism.
[Aspect 2] In the dispensing device described in aspect 1,
   the mounting body includes a mounting plate and a mounting plate frame, the plurality of dispensing tips being mounted on the mounting plate at the predetermined interval in the first direction and the second direction, the mounting plate frame enclosing at least a portion of a periphery of the mounting plate.
[Aspect 3] In the dispensing device described in aspect 2,
   the mounting plate has a rectangular shape, and the mounting plate frame encloses three sides of the rectangular shape.
[Aspect 4] In the dispensing device described in aspect 2 or 3,
   the attaching mechanism includes one or a plurality of attaching magnets and one or a plurality of metal bodies, the one or the plurality of attaching magnets being provided to one of the mounting plate frame and the dispensing body, the one or the plurality of metal bodies being provided to another of the mounting frame and the dispensing body.
[Aspect 5] In the dispensing device described in any one of aspects 2 to 4,
   the mounting plate frame is suspended from the dispensing body.
[Aspect 6] In the dispensing device described in any one of aspects 1 to 5,
   the attaching mechanism includes one or a plurality of attaching magnets and one or a plurality of metal bodies, the one or the plurality of attaching magnets being provided to one of the mounting body and the dispensing body, the one or the plurality of metal bodies being provided to another of the mounting body and the dispensing body.
[Aspect 7] In the dispensing device described in aspect 4 or 6,
   the plurality of attaching magnets are disposed to surround one of the plurality of dispensing tips and the plurality of dispensing nozzles, and
   the plurality of metal bodies are disposed to surround another of the plurality of dispensing tips and the plurality of dispensing nozzles.
[Aspect 8] In the dispensing device described in any one of aspects 1 to 3,
   the attaching mechanism includes one or a plurality of first magnets and one or a plurality of second magnets, the one or the plurality of first magnets being provided to one of the mounting body and the dispensing body, the one or the plurality of second magnets being provided to another of the mounting body and the dispensing body.
[Aspect 9] In the dispensing device described in aspect 8,
   the plurality of first magnets are disposed to surround one of the plurality of dispensing tips and the plurality of dispensing nozzles, and
   the plurality of second magnets are disposed to surround another of the plurality of dispensing tips and the plurality of dispensing nozzles.
[Aspect 10] In the dispensing device described in any one of aspects 1 to 10,
   the removing mechanism includes a remover and a remover moving mechanism, the remover being configured to apply a force to the mounting body in a direction in which the mounting body separates from the dispensing body, the remover moving mechanism being configured to move the remover.
[Aspect 11] In the dispensing device described in aspect 10,
   when the remover presses an upper surface of the mounting body and/or upper end surfaces of the plurality of dispensing tips, the plurality of dispensing tips are removed from the plurality of dispensing nozzles.
[Aspect 12] In the dispensing device described in any one of aspects 1 to 11, including
   a magnetic force applying unit configured to exert a magnetic force on an inside of each of the plurality of dispensing tips in a state in which the plurality of dispensing tips mounted on the mounting body are attached to the plurality of dispensing nozzles.
[Aspect 13] In the dispensing device described in aspect 12,
   the magnetic force applying unit includes
   a plurality of comb sections including a plurality of protruding pieces,
   a plurality of comb magnets disposed on each of the plurality of protruding pieces, and
   a comb moving mechanism configured to move the plurality of comb sections in a direction in which the plurality of comb sections are inserted into or pulled out from gaps between the plurality of dispensing nozzles.
[Aspect 14] In the dispensing device described in any one of aspects 1 to 13,
   each of the plurality of dispensing nozzles includes an elastic member that comes into contact with each of the plurality of dispensing tips.
[Aspect 15] In a specimen processing and measuring device including a first dispensing unit, a processing unit, a heating unit, a measuring unit, and a second dispensing unit, the first dispensing unit being configured to dispense a parent specimen into an aliquot container from a parent specimen container, the processing unit being configured to extract a nucleic acid from an aliquot in the aliquot container, the heating unit being configured to repeat heating and cooling to amplify the nucleic acid extracted, the measuring unit being configured to measure the nucleic acid amplified, the second dispensing unit being configured to dispense a reagent or a solution into at least the processing unit,
   the second dispensing unit is the dispensing device described in any one of aspects 1 to 14.

### Advantageous Effect of Invention

The dispensing device and the specimen processing and measuring system including the dispensing device of the present invention allow a plurality of dispensing tips to be collectively attached to and removed from a plurality of dispensing nozzles.

### Brief Description of Drawings

[Figure 1] Figure 1 is a top perspective view showing a specimen processing and measuring system according to a first embodiment of the present invention.
[Figure 2] Figure 2 is a front view showing the specimen processing and measuring system shown in Figure 1.
[Figure 3] Figure 3 is a schematic top view showing a stage of the specimen processing and measuring system shown in Figure 1.
[Figure 4] Figure 4(a) is a top plan view showing a dispensing range of a first dispensing unit of the specimen processing and measuring system shown in Figure 1, and Figure 4(b) is a top plan view showing a dispensing range of a second dispensing unit of the specimen processing and measuring system shown in Figure 1.
[Figure 5] Figure 5 is a top perspective view showing the second dispensing unit (dispensing device) shown in Figure 1.
[Figure 5A] Figure 5A is a bottom perspective view showing the second dispensing unit shown in Figure 5.
[Figure 6] Figure 6 is a top perspective view showing a mounting body for dispensing tips shown in Figure 5.
[Figure 7] Figure 7(a) is a top perspective view showing the second dispensing unit shown in Figure 5 in a state in which the dispensing tips are not installed, and Figure 7(b) is a top perspective view showing the second dispensing unit shown in Figure 5 in a state in which the dispensing tips are installed.
[Figure 8] Figure 8(a) is a bottom perspective view showing the second dispensing unit shown in Figure 5 in a state in which the dispensing tips are installed, and Figure 8(b) is a bottom perspective view showing the second dispensing unit shown in Figure 5 in a state in which the dispensing tips are not installed.
[Figure 9] Figure 9(a) is a side view showing the second dispensing unit shown in Figure 5, Figure 9(b) is a front view of the second dispensing unit shown in Figure 5 in a state in which a magnetic force applying unit is retreated, and Figure 9(c) is a front view of the second dispensing unit shown in Figure 5 in a state in which the magnetic force applying unit protrudes.
[Figure 10] Figure 10 is a side view showing the second dispensing unit shown in Figure 9(a) with a part cut away.
[Figure 11] Figure 11 is an enlarged cross-sectional view showing dispensing nozzles of a fourth modification of the first embodiment and an area around the dispensing nozzles.
[Figure 12] Figure 12 is a top perspective view showing a second dispensing unit according to a second embodiment of the present invention.
[Figure 13] Figure 13 is a top perspective view showing a state in which a plurality of dispensing tips are installed by the second dispensing unit shown in Figure 12.
[Figure 14] Figure 14 is a top perspective view showing a second dispensing tip rack and the plurality of dispensing tips shown in Figure 12.
[Figure 15] Figure 15 is an exploded perspective view of the second dispensing tip rack shown in Figure 14.
[Figure 16] Figure 16 is a front view showing the operation of the second dispensing unit according to the second embodiment.
[Figure 17] Figure 17 is a top perspective view showing a second dispensing unit according to a third embodiment of the present invention.
[Figure 18] Figure 18 is a front view showing the second dispensing unit shown in Figure 17.
[Figure 19] Figure 19 is an exploded perspective view showing the second dispensing unit shown in Figure 17.
[Figure 20] Figure 20(a) is a horizontal cross-sectional view showing the second dispensing unit shown in Figure 18, and Figure 20(b) is a vertical cross-sectional view taken along the line bb showing the second dispensing unit shown in Figure 18.
[Figure 21] Figure 21 is a front view showing the operation of the second dispensing unit according to the third embodiment.
[Figure 22] Figure 22 is a front view showing the operation of the second dispensing unit according to the third embodiment.

### Description of Embodiments

Respective embodiments relating to a dispensing device of the present invention and a specimen processing and measuring system including the dispensing device will be described with reference to drawings. In the respective drawings, identical components are given the same reference symbols, and the description of such components will be omitted when appropriate. In the respective drawings, relative sizes and/or arrangement of respective components are accurately illustrated in principle. However, the present invention is not limited to such relative sizes and/or arrangement of the respective components. In the respective embodiments of the present invention, a specimen is a living body-related substance, and a body fluid (saliva, nasopharyngeal mucus, or the like) taken from a living body, or any dissolvable tissue may be preferably used. Note that the x direction, the y direction, and the z direction in the embodiments respectively correspond to the first direction, the second direction, and the third direction in Claims.

### (First embodiment)

### [Basic configuration of specimen processing and measuring system]

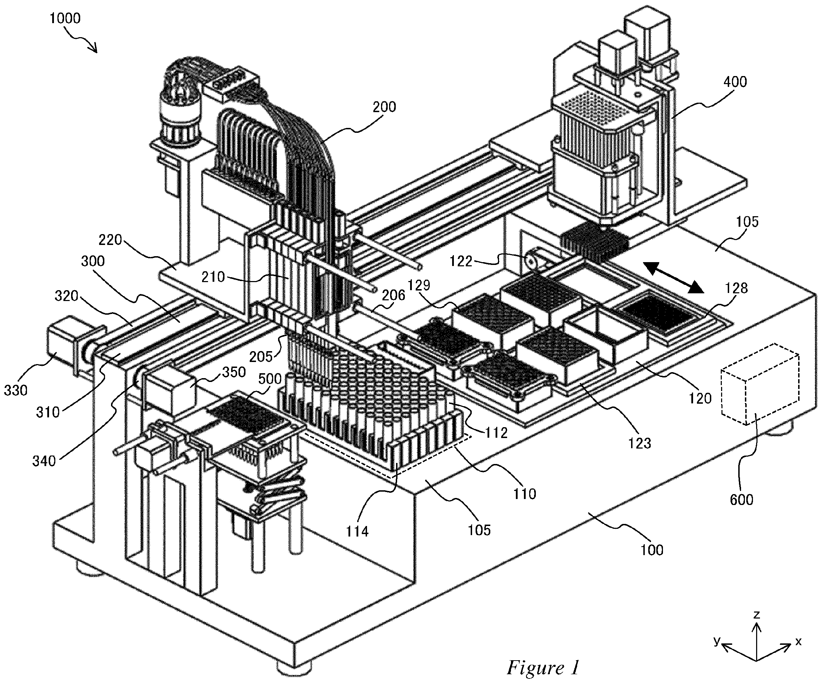

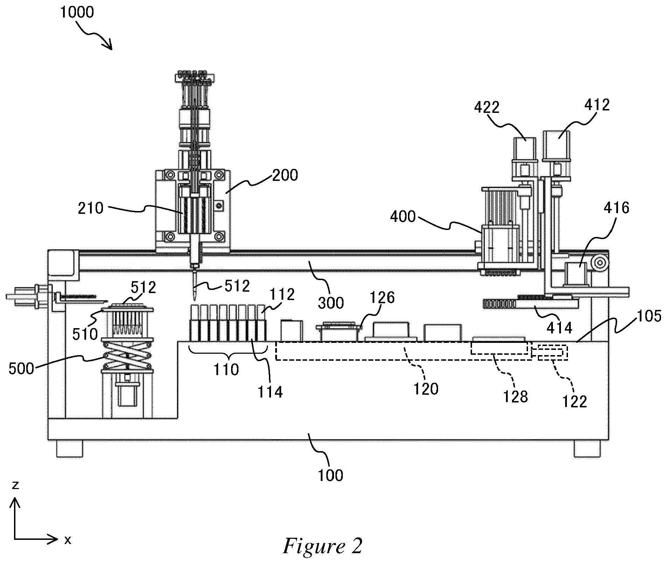

The basic configuration of a specimen processing and measuring system 1000 according to a first embodiment of the present invention will be described with reference to Figure 1 and Figure 2. The specimen processing and measuring system 1000 includes a base 100, a first dispensing unit 200, a moving mechanism 300, a second dispensing unit (dispensing device) 400, a first dispensing tip housing unit 500, and a control unit (computer) 600. The base 100 includes a stage that supports respective components. The first dispensing unit 200 dispenses parent specimens into aliquot containers (wells) from parent specimen containers. The moving mechanism 300 moves the first dispensing unit 200 and/or the second dispensing unit 400 in the x direction. The second dispensing unit 400 dispenses aliquots from the aliquot containers and then performs processing relating to PCR. The first dispensing tip housing unit 500 houses a plurality of dispensing tips for the first dispensing unit 200. The control unit 600 controls the operations of the respective components 200 to 400.

The base 100 includes a fixed stage 105, a movable stage 120 movable in the y direction, and a moving mechanism (belt and motor) 122 for the movable stage 120. The control unit 600 controls the operation of the moving mechanism 122. A parent specimen storage unit 110 is provided to the fixed stage 105 on the upper surface of the base 100. The parent specimen storage unit 110 includes a plurality of parent specimen container racks 114 each of which houses a plurality of parent specimen containers 112 in one row in the y direction.

The first dispensing unit 200 is a pitch conversion dispensing device including a plurality of dispensing nozzles arranged in one row. The first dispensing unit 200 may preferably include 12 dispensing nozzles. As shown in Figures 1 to 3, the first dispensing unit 200 includes a plurality of dispensing nozzles (a plurality of first dispensing nozzles) 205, a pitch conversion mechanism 210, and a support part 220. The plurality of dispensing nozzles 205 are arranged in one row in the y direction. The pitch conversion mechanism 210 converts the pitch of the plurality of dispensing nozzles 205 in the y direction. The support part 220 supports the entire first dispensing unit 200 above the moving mechanism 300 such that the entire first dispensing unit 200 is movable in the x direction. The control unit 600 controls the operation of the drive motor of the pitch conversion mechanism 210.

The pitch conversion mechanism 210 includes a plurality of guide rods 206, a link mechanism, and a link drive unit. The plurality of guide rods 206 cause the plurality of dispensing nozzles 205 to slide in the y direction. The link mechanism is connected to the plurality of dispensing nozzles 205 and can extend and contract in the y direction. The link drive unit drives the link mechanism. For this pitch conversion mechanism, for example, a pitch conversion mechanism may be used that is described in Figure 5 of International Publication No. WO 2016/031705 filed by inventors of the present invention. The pitch conversion mechanism 210 can perform extension and contraction between a first pitch and a second pitch, the first pitch corresponding to the arrangement of the plurality of parent specimen containers 112 disposed in the parent specimen container racks 114, the second pitch corresponding to the arrangement of the plurality of aliquot containers (wells) disposed on a PCR plate. The first pitch (22.5 mm, for example) is preferably larger than the second pitch (9.0 mm, for example).

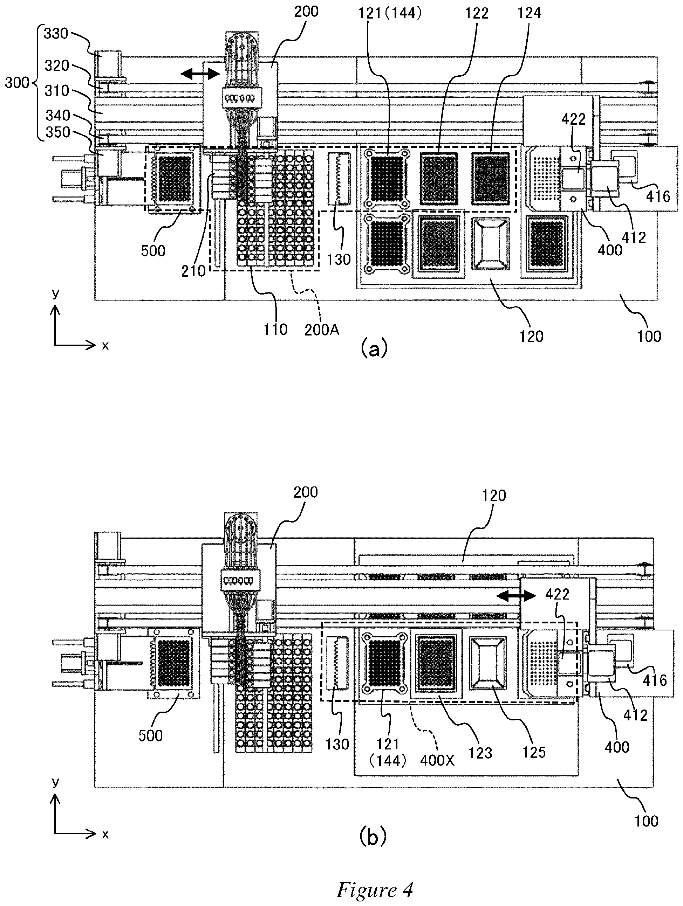

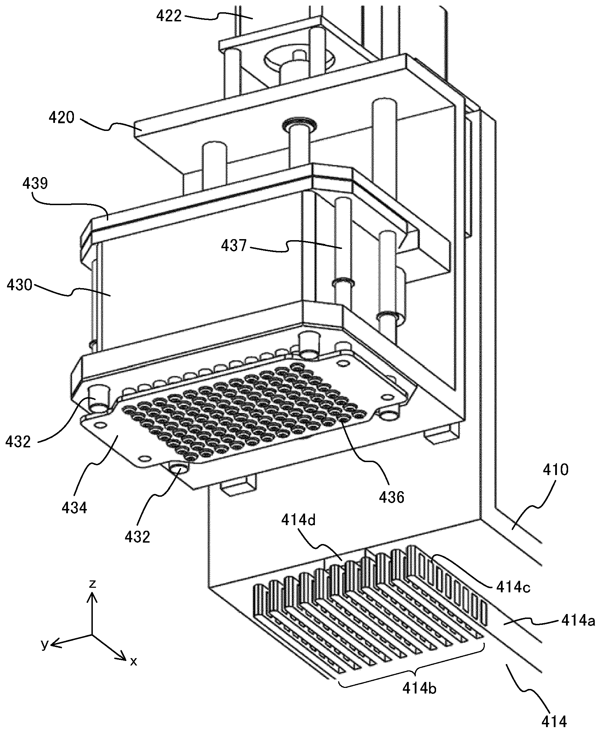

As shown in Figure 1 and Figure 4(a), the moving mechanism 300 includes a rail 310, a first belt 320, a first motor 330, a second belt 340, and a second motor 350. The rail 310 supports the first dispensing unit 200 and/or the second dispensing unit 400 in a movable manner. The first belt 320 moves the first dispensing unit 200. The first motor 330 drives the first belt. The second belt 340 moves the second dispensing unit 400. The second motor 350 drives the second belt 340. The control unit 600 controls the operations of the first motor 330 and/or the second motor 350.

### [Configuration of stage]

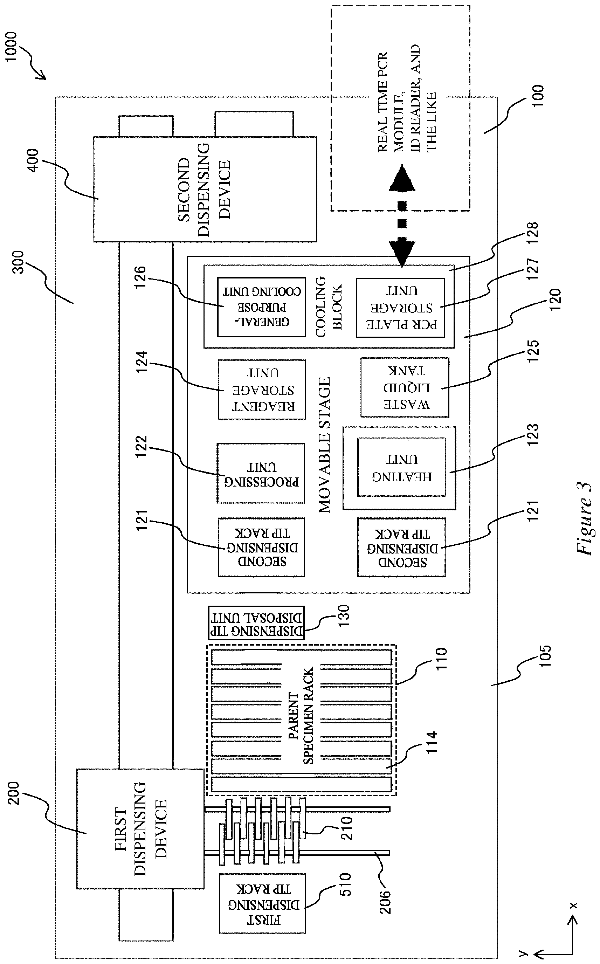

The structure of the stage of the specimen processing and measuring system 1000 will be described with reference to Figure 3, which is a schematic top plan view. The parent specimen storage unit 110 is provided on the fixed stage 105. Second dispensing tip housing units 121, a processing unit 122, a heating unit (thermal cycler) 123, a reagent storage unit 124, and a disposal tank 125 are provided on the movable stage 120. The second dispensing tip housing units 121 house a plurality of dispensing tips for the second dispensing unit 400. The processing unit 122 houses a PCR plate or a microplate for performing processing (purifying, extracting) of aliquots, and performs processing. The heating unit 123 houses the PCR plate in which a plurality of extracted nucleic acids extracted from the aliquots in the processing unit 122 are housed, and performs PCR. The reagent storage unit 124 houses reagents used for processing of aliquots, amplification of nucleic acids, and detection of amplified nucleic acids, for example. Solutions that become unnecessary in the processing or the like are disposed of into the disposal tank 125. The PCR plate or the microplate preferably has 96 (8 × 12) wells arranged at substantially equal intervals in the x and y directions. The heating unit 123 repeats heating and cooling so as to amplify extracted nucleic acids.

A general-purpose cooling unit 126 and/or a PCR plate storage unit 127 may be preferably provided on the movable stage 120, the PCR plate storage unit 127 storing PCR plates. The movable stage 120 may be configured such that a cooling mechanism (cooling block) 128 is provided on the lower surface of the general-purpose cooling unit 126. The control unit 600 controls the operations of the heating unit 123 and the cooling mechanism 128. Further, the specimen processing and measuring system 1000 may be preferably provided with an ID reader and/or a real time PCR module, the ID reader reading parent specimen IDs provided to the parent specimen containers and rack IDs of the parent specimen container racks, the real time PCR module performing real time PCR.

Figure 4(a) shows a state in which the movable stage 120 is moved in the direction toward the front side (in the direction away from the moving mechanism 300 in the y direction). In Figure 4(a), a broken line region 200A shows the region within which the row of the plurality of dispensing nozzles 205 of the first dispensing unit 200 (Figure 1) can move. The broken line region 200A preferably contains, with the plurality of dispensing nozzles 205 set to the first pitch (small pitch), a region above the first dispensing tip housing unit 500, a portion of the parent specimen storage unit 110, a dispensing tip disposal unit 130, the second dispensing tip rack 121, the processing unit 122, and the reagent storage unit 124. Further, the broken line region 200A preferably contains a region above the entire parent specimen storage unit 110 with the plurality of dispensing nozzles 205 set to the second pitch (large pitch).

Figure 4(b) shows a state in which the movable stage 120 is moved in the direction toward the rear side (in the direction approaching the moving mechanism 300). In Figure 4(b), a broken line region 400X shows the region within which the group of a plurality of dispensing nozzles 436 of the second dispensing unit 400 (Figure 5A) can move. The broken line region 400X contains a region above the dispensing tip disposal unit 130, the second dispensing tip rack 121, the heating unit 123, the waste liquid tank 125, and the PCR plate storage unit 127. As shown in Figure 5A, the plurality of dispensing nozzles 436 are arranged at predetermined intervals (at substantially equal intervals in the x and y directions) across the lower end plane (x and y directions) of a sub-support part 420.

### [Second dispensing unit]

The second dispensing unit (dispensing device) 400 will be described with reference to Figure 5 to Figure 9. The second dispensing unit 400 includes a plurality of dispensing nozzles that correspond to a PCR plate or a microplate having a plurality of wells. As will be described later, the second dispensing unit 400 includes an attaching mechanism and a removing mechanism, the attaching mechanism collectively attaching a plurality of dispensing tips 142, arranged at the predetermined intervals in the x and y directions, to the plurality of dispensing nozzles 436, the removing mechanism collectively removing the plurality of dispensing tips 142, arranged at the predetermined intervals in the x and y directions, from the plurality of dispensing nozzles 436. The second dispensing unit 400 may preferably include 96 dispensing nozzles 436 arranged at substantially equal intervals in the x and y directions as shown in Figure 5A.

As shown in Figure 5, the second dispensing unit 400 includes a main support part 410, the sub-support part 420, and a sub-support part moving motor 412. The main support part 410 supports the entire second dispensing unit 400 in a movable manner in the x direction with respect to the moving mechanism 300. The sub-support part 420 is movable in the z direction with respect to the main support part 410. The sub-support part moving motor 412 moves the sub-support part 420 in the z direction. The sub-support part 420 includes a dispensing body (cylinder block) 430, a plurality of plungers 438, and a plunger motor 422. The plurality of plungers 438 are movable in the z direction with respect to the dispensing body 430 so as to allow the plurality of dispensing nozzles 436 to perform suction and discharge. The plunger motor 422 moves the plurality of plungers 438 in the z direction by moving a plunger moving plate 439 in the z direction. The dispensing body 430 is fixed to the sub-support part 420. The control unit 600 controls the operations of the sub-support part moving motor 412 and/or the plunger motor 422.

The attaching mechanism that collectively attaches the plurality of dispensing tips 142 to the plurality of dispensing nozzles 436 will be described. As shown in Figure 5, a second dispensing tip rack 140, a group of the second dispensing tips 142, and a mounting body (catch plate) 144 are disposed below the dispensing body 430. The group of the second dispensing tips 142 is housed in the second dispensing tip rack 140 at predetermined intervals in the x and y directions. The second dispensing tips 142 are mounted on the mounting body 144 at substantially equal intervals in the x and y directions.

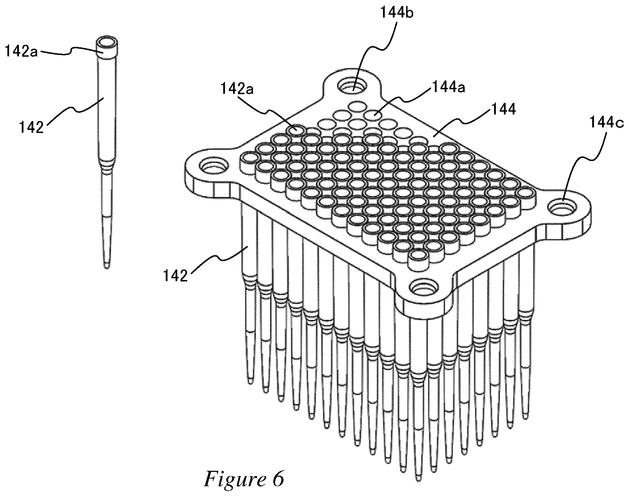

As shown in Figure 6, each second dispensing tip 142 includes an upper end opening portion 142a having a larger outer diameter than the center portion of the second dispensing tip 142. The mounting body 144 has a plurality of through holes 144a arranged at predetermined intervals in the x and y directions and penetrating through the mounting body 144 in the z direction. The outer diameter of the upper end opening portion 142a of each second dispensing tip 142 is larger than the inner diameter of each through hole 144a of the mounting body 144 and hence, the lower end of the upper end opening portion 142a of the second dispensing tip 142 is mounted at the periphery of the through hole 144a. The plurality of dispensing tips 142 may be fixed to the mounting body 144.

The mounting body 144 includes one or a plurality of metal bodies (metal disks) 144b. The one or the plurality of metal bodies 144b are fixed to the mounting body 144. The plurality of metal bodies 144b are preferably disposed in such a way as to surround the plurality of dispensing tips 142 mounted on the mounting body 144. The one or the plurality of metal bodies 144b are preferably disposed at the peripheral edge of the mounting body 144. The one or the plurality of metal bodies 144b are preferably housed in one or a plurality of recessed portions 144c provided to the mounting body 144.

As shown in Figure 5A, which is a bottom perspective view, the lower surface of the dispensing body (cylinder block) 430 fixed to the sub-support part 420 is provided with a group of the plurality of dispensing nozzles 436 and one or a plurality of attaching magnets 432. The plurality of attaching magnets 432 are preferably disposed in such a way as to surround the group of the plurality of dispensing nozzles 436.

The plurality of attaching magnets 432 attract the plurality of metal plates 144b of the mounting body 144. The plurality of attaching magnets 432 preferably protrude in the z direction from the lower surface of the dispensing body 430. Each attaching magnet 432 may preferably have a columnar shape. Each attaching magnet 432 may preferably be a neodymium magnet.

The attaching mechanism includes the one or the plurality of attaching magnets 432, fixed to the dispensing body 430, and the one or the plurality of metal bodies 144b, fixed to the mounting body 144.

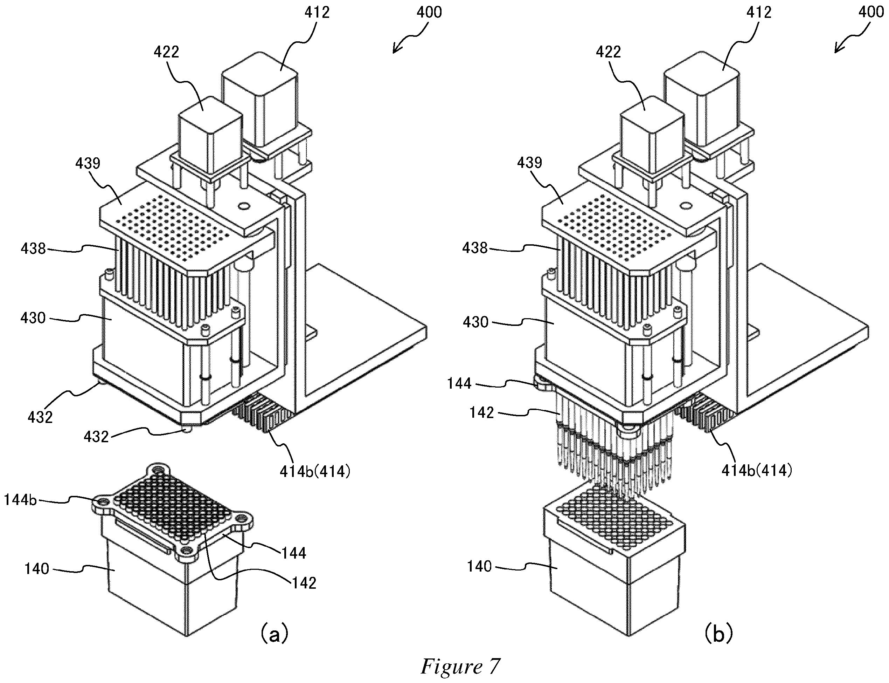

The operation of attaching the plurality of dispensing tips to the plurality of dispensing nozzles 432 will be described with reference to Figure 7. As shown in Figure 7(a), the plurality of dispensing tips 142 are housed in the second dispensing tip rack 140 with the plurality of dispensing tips 142 mounted on the mounting body 144. When the group of the plurality of dispensing nozzles 436 of the second dispensing unit 400 (Figure 5A) descends toward the mounting body 144 from above the mounting body 144 in such a state, so that the plurality of metal bodies 144b fixed to the mounting body 144 are attracted by the plurality of magnet bodies 432 (Figure 5A), the plurality of dispensing nozzles 436 are inserted into the upper end opening portions 142a of the plurality of dispensing tips 142, so that the plurality of dispensing tips 142 and the plurality of dispensing nozzles 436 are brought into close contact with each other.

The weight of the plurality of dispensing tips 142 can be supported by the plurality of magnet bodies 432, disposed proximate to the plurality of dispensing nozzles 436, via the plurality of metal bodies 144b of the mounting body 144 instead of being supported by the plurality of dispensing nozzles 436. Therefore, it is sufficient to press-fit the plurality of dispensing nozzles 436 into the upper end opening portions 142a of the plurality of dispensing tips 142 with a relatively small force at a level that allows the plurality of dispensing tips 142 to be brought into close contact with the plurality of dispensing nozzles 436. An elastic member (an O-ring or the like) that comes into contact with the dispensing tip may be preferably provided to the outer peripheral surface of each of the plurality of dispensing nozzles 436.

Next, the removing mechanism that collectively removes the plurality of dispensing tips 142 will be described. As shown in Figure 5A, a remover 434 is provided to the lower side of the dispensing body 430 in such a way as to be movable in the z direction with respect to the sub-support body 420. As will be described later, the remover 434 can collectively remove the plurality of dispensing tips 142 from the plurality of dispensing nozzles 436. The remover 434 has a substantially plate shape, and has a plurality of through holes. The plurality of dispensing nozzles 436 pass through the plurality of through holes of the remover 434, and are exposed beneath the remover 434. The plurality of dispensing nozzles 436 are not integrally formed with the remover 434.

As shown in Figure 5 and 5A, the side surface of the dispensing body 430 is provided with a plurality of pressing rods (remover moving mechanism) 437 to press the remover 434 downward, the plurality of pressing rods 437 being movable in the z direction with respect to the sub-support body 420. The plurality of pressing rods 437 may preferably be rod actuators. The lower ends of the plurality of pressing rods 437 are fixed to the remover 434 and hence, the plurality of pressing rods 437 and the remover 434 move upward and downward as an integral body. The control unit 600 controls the moving operation of the plurality of pressing rods 437. As shown in Figure 5A, the lower end portions of the plurality of pressing rods 437 are disposed in the vicinity of the plurality of attaching magnets 432 (attaching mechanism), and press the remover 434 downward. The removing mechanism includes the remover 434, the plurality of pressing rods 437, and the mounting body 144. The remover 434 applies a force to the mounting body 144 in the direction in which the plurality of dispensing tips and the mounting body 144 separate from the dispensing body 430.

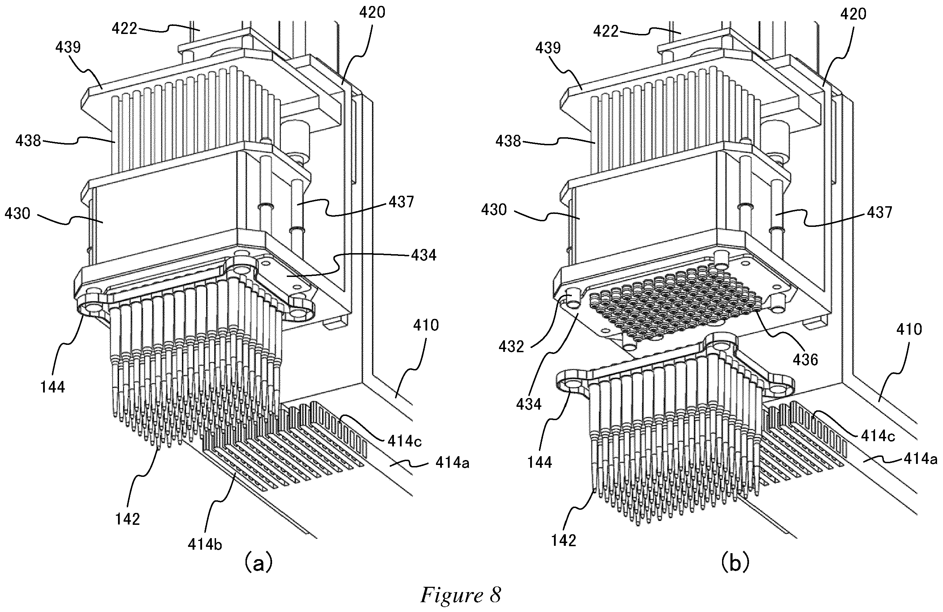

The operation of the removing mechanism in removing the plurality of dispensing tips from the plurality of dispensing nozzles will be described with reference to Figure 8. As shown in Figure 8(a), the plurality of dispensing tips 142 are attached to the group of the plurality of dispensing nozzles 436 (Figure 5A) with the plurality of dispensing tips 142 held by the mounting body 144. When the control unit 600 moves the plurality of pressing rods 437 downward in such a state, the remover 434 is also moved downward, so that the lower surface of the remover 434 presses the upper surface of the mounting body 144 and/or the upper end surfaces of the plurality of dispensing tips 142. When the force caused by such pressing exceeds the force of the plurality of attaching magnets 432 attracting the plurality of metal bodies 144b, as shown in Figure 8(b), the mounting body 144 on which the plurality of dispensing tips 142 are mounted is removed from the plurality of dispensing nozzles 436.

As a modification, a configuration may be adopted in which the one or the plurality of attaching magnets 432 are fixed to the mounting body 144, and the one or the plurality of metal bodies 144b are fixed to the plurality of pressing rods 437 to be integrally formed with the plurality of pressing rods 437.

### [Magnetic force applying unit]

A comb-shaped magnetic force applying unit 414 included in the second dispensing unit 400 in this embodiment will be described. For purification of specimens in the second dispensing unit 400 (pre-processing), a method may be preferably used that is proposed by the inventors of the present invention in International Publication No. WO97/44671. This method is performed by using magnetic particles that attract a target nucleic acid, dispensing tips that hold a solution containing the magnetic particles, and an external magnet that is movable with respect to the dispensing tips.

The second dispensing unit 400 in this embodiment includes a magnetic force applying unit 414 to selectively exert a magnetic force on magnetic particles in the plurality of dispensing tips 142 attached to the plurality of dispensing nozzles 436.

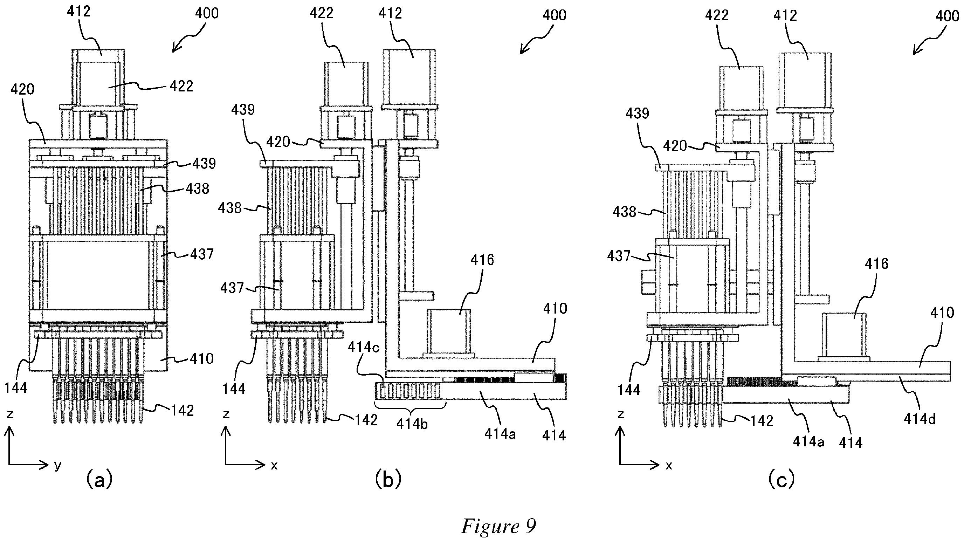

As shown in Figure 5A and Figure 9, the magnetic force applying unit 414 includes a comb body 414a, a comb body moving motor 416, comb sections 414b, a plurality of comb magnets 414c (Figure 5A, Figure 9(b)), and a rail 414d. The comb body 414a is movable in the x direction with respect to the main support part 410. The comb body moving motor 416 is provided to the main support part 410 so as to move the comb body 414a in the x direction. The comb sections 414b are provided at the distal end portion of the body 414a on a side close to the plurality of dispensing tips 142. The plurality of comb magnets 414c are arranged on the protruding piece of each comb section 414b at predetermined intervals in the x direction. The rail 414d allows the comb body 414a to move in the x direction with respect to the main support part 410. The control unit 600 controls the operation of the comb body moving motor 416.

As shown in a comb-inserted state shown in Figure 9(c), when the respective protruding pieces of the plurality of comb sections 414b are inserted from the x direction into gaps between the plurality of rows of the plurality of dispensing tips 142 with the plurality of dispensing tips 142 held on the dispensing body 430, the plurality of comb magnets 414c provided to the respective protruding pieces of the plurality of comb sections 414b can attract magnetic particles in a solution in the plurality of dispensing tips 142.

As shown in a comb-pulled-out state in Figure 9(b), when the respective protruding pieces of the plurality of comb sections 414b are pulled out in the x direction from the gaps between the rows of the plurality of dispensing tips 142 with the plurality of dispensing tips 142 held, the plurality of comb magnets 414c provided to the respective protruding pieces of the plurality of comb sections 414b exert no magnetic forces on magnetic particles in the plurality of dispensing tips 142, and the magnetic particles diffuse in the solution in the plurality of dispensing tips 142.

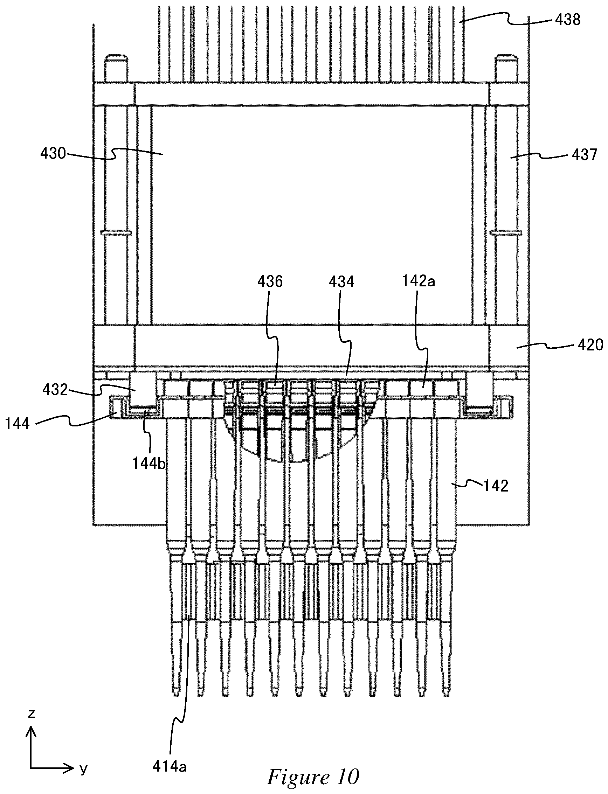

In the state shown in Figure 9(c), the plurality of metal bodies 144b fixed to the mounting body 144 are attracted by the plurality of attaching magnets 432, fixed to the dispensing body 430, as shown in Figure 10.

There may be cases in which the magnetic force of the plurality of attaching magnets 432 affects the plurality of comb magnets 414c of the magnetic force applying unit 414 or magnetic particles in the dispensing tips 142. To prevent such a situation, magnetic force shields (a ferromagnetic material, such as iron) may be preferably provided to the side surfaces of the plurality of attaching magnets 432 and to the side surfaces and the lower surfaces of the plurality of metal bodies 144b.

The function of the O-ring included in each dispensing nozzle 436 in this embodiment will be described. The dispensing nozzle 436 in this embodiment is not configured to support the load of the dispensing tip only by the O-ring to prevent the dispensing tip from falling off the dispensing nozzle. In the conventional example, to prevent a dispensing tip from falling off a dispensing nozzle, each dispensing tip is press-fitted into the dispensing nozzle with an O-ring with a relatively large force. However, when attaching and removing the dispensing tip to and from the dispensing nozzle is repeated, due to repeated sliding of the dispensing tip on the O-ring, the O-ring deteriorates, thus reducing the press-fitting force. As a result of a reduction in press-fitting force, there is a possibility that the dispensing tip falls off the dispensing nozzle and liquid scatters, thus causing contamination. Therefore, to maintain the press-fitting force of the O-ring, it is necessary to replace or perform maintenance of the complicated and delicate O-ring.

In contrast, in the present embodiment, it is unnecessary to press-fit the dispensing tip 142 into each dispensing nozzle 436 with the O-ring with a relatively large force at a level at which the load of the dispensing tip is supported by the dispensing nozzle 436. That is, the upper end opening portion 142a of each dispensing tip 142 is mounted at the periphery of the through hole 144a of the mounting body 144 and hence, the load of the dispensing tip 142 is applied to the dispensing-tip attaching mechanism (the mounting body 144, the metal bodies 144b, the magnets 432, and the sub-support body 420). Accordingly, it is unnecessary to press-fit the dispensing tip 142 into each dispensing nozzle 436 with the O-ring with a relatively large force. Therefore, in the attaching mechanism in this embodiment, it is unnecessary to replace or to perform maintenance of a complicated and delicate O-ring to maintain the press-fitting force of the O-ring. Further, in the attaching mechanism in this embodiment, it is sufficient that the O-ring have an elastic force of a level that can seal the gap formed between the dispensing nozzle 436 and the upper end opening portion 142a of the dispensing tip 142 to prevent leakage of gas and liquid. In the attaching mechanism in this embodiment, in installing the dispensing tip 142 on the dispensing nozzle 436, it is unnecessary to press-fit the dispensing tip 142 into the dispensing nozzle 436 with the O-ring with a relatively large force and hence, the O-ring is less likely to deteriorate.

### [Modification]

Respective modifications applicable to the first to third embodiments will be described. The attaching mechanism in the first embodiment includes the mounting body 144 for the dispensing tips 142, the plurality of metal bodies 144b provided to the mounting body 144, and the plurality of attaching magnets 432 that attract the plurality of metal bodies 144b. An attaching mechanism in a second embodiment includes a mounting body 144A for dispensing tips 142, a plurality of metal bodies 144A1b provided to the mounting body 144A, and a plurality of attaching magnets 432 that attract the plurality of metal bodies 144A1b. An attaching mechanism in a third embodiment includes a mounting body 144B for dispensing tips 142, a plurality of metal bodies 144B1b provided to the mounting body 144B, and a plurality of attaching magnets 432 that attract the plurality of metal bodies 144B1b. In contrast, in an attaching mechanism of a first modification, the plurality of attaching magnets 432 may be a plurality of first magnets 432, and the plurality of metal bodies 144b, 144A1b, 144B1b may be a plurality of second magnets. The first magnet and the second magnet forming a pair are disposed in such a way as to have different polarities with the first magnet and the second magnet facing each other.

In the attaching mechanisms in the first to third embodiments, each magnet 432 and each metal body 144b, 144A1b, 144B1b forming a pair are in contact with each other. In contrast, in an attaching mechanism of a second modification, each magnet 432 and each metal body 144b, 144A1b, 144B1b forming a pair are not in contact with each other, and the dispensing tips 142 are installed on the dispensing nozzles 436 with each magnet 432 and each metal body 144b, 144A1b, 144B1b facing each other with a gap formed therebetween. The plurality of metal bodies 144b, 144A1b, 144B1b are attracted by a magnetic force without coming into contact with the plurality of attaching magnets 432 and hence, it is possible to stably hold the plurality of metal bodies 144b, 144A1b, 144B1b by the plurality of attaching magnets 432. The gap formed between each magnet 432 and each metal body 144b, 144A1b, 144B1b forming a pair may be preferably set to 0.7 to 0.3 mm, and more preferably set to approximately 0.5 mm.

In the same manner as the second modification, in an attaching mechanism of a third modification, each first magnet and each second magnet of the first modification forming a pair are not in contact with each other, and the dispensing tips 142 are installed on the dispensing nozzles 436 with each first magnet and each second magnet facing each other with a gap formed therebetween. The plurality of first magnets are attracted by a magnetic force without coming into contact with the plurality of second magnets and hence, it is possible to stably hold the plurality of metal bodies 144b, 144A1b, 144B1b by the plurality of attaching magnets 432. The gap formed between each first magnet and each second magnet forming a pair may be preferably set to 0.7 to 0.3 mm, and more preferably set to approximately 0.5 mm.

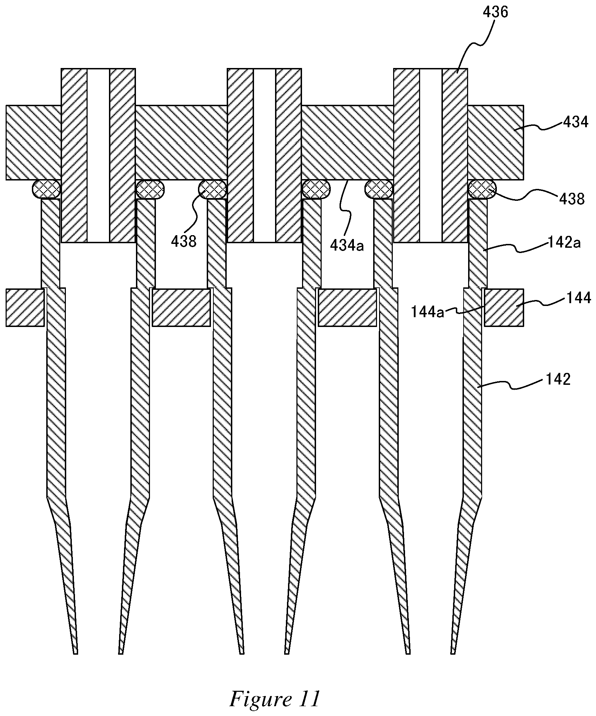

The O-ring in each of the first to third embodiments of the present invention is preferably disposed on the outer peripheral surface of the dispensing nozzle 436 in such a way as to be located between the inner peripheral surface of the upper end opening portion 142a of the dispensing tip 142 and the outer peripheral surface of the dispensing nozzle 436 in the same manner as the conventional technique. In contrast, an O-ring 438 of a fourth modification is disposed on a lower surface 434a of the remover 434 in such a way as to surround the periphery of the dispensing nozzle 436 as shown in Figure 11. When the dispensing tip 142 is installed on the dispensing nozzle 436, the O-ring 438 is disposed between the lower surface 434a and the upper end opening portion 142a of the dispensing tip 142. When the O-ring 438 is disposed as described above, the dispensing tip 142 does not slide on the O-ring 438 in installing the dispensing tip 142 on the dispensing nozzle 436 and hence, it is possible to avoid deterioration of the O-ring 438 caused by sliding.

### (Second embodiment)

A specimen processing system according to a second embodiment of the present invention differs from the specimen processing system 1000 according to the first embodiment only with respect to the second dispensing unit, and the configurations and the operations of other components of the specimen processing system according to the second embodiment of the present invention are substantially identical to those of the specimen processing system 1000 and hence, drawings and the description of the configurations and the operations of the other components will be omitted.

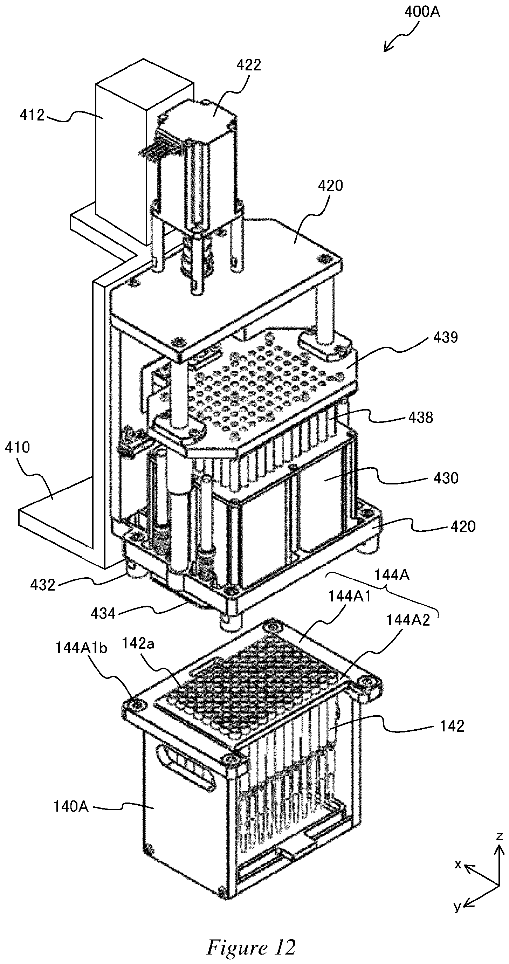

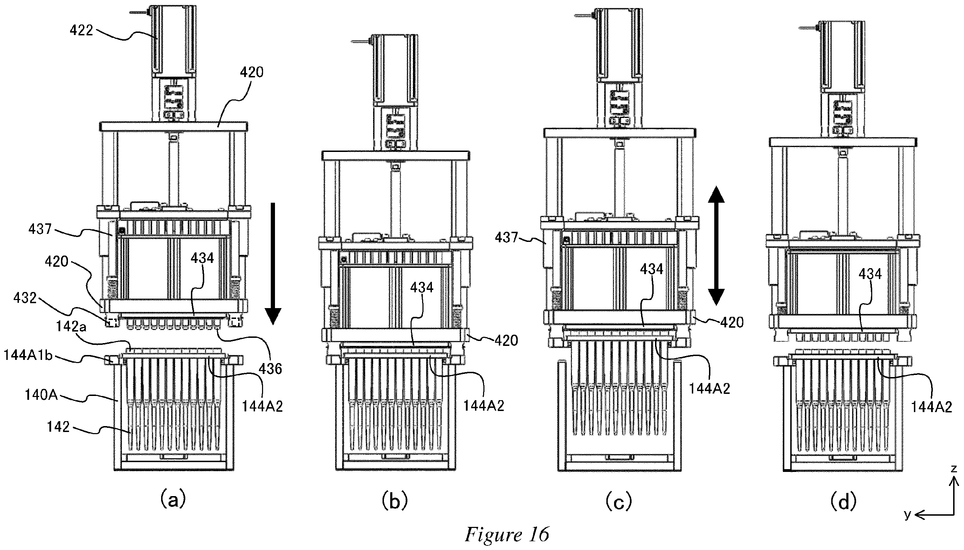

A second dispensing unit 400A according to the second embodiment will be described with reference to Figure 12 to Figure 16. Components of the second dispensing unit 400A identical to the corresponding components of the second dispensing unit 400 are given the same reference symbols as the corresponding components of the second dispensing unit 400. The second dispensing unit 400A includes a plurality of dispensing nozzles 436 that correspond to a PCR plate or a microplate having a plurality of wells. As will be described later, the second dispensing unit 400A includes an attaching mechanism and a removing mechanism, the attaching mechanism collectively attaching a plurality of dispensing tips 142, arranged at predetermined intervals in the x and y directions, to the plurality of dispensing nozzles 436 (Figure 16), the removing mechanism collectively removing the plurality of dispensing tips 142, arranged at the predetermined intervals in the x and y directions, from the plurality of dispensing nozzles 436. The second dispensing unit 400 may preferably include 96 dispensing nozzles 436 arranged at substantially equal intervals in the x and y directions in the same manner as Figure 5A. In the second embodiment, the second dispensing unit 400A includes a magnetic force applying unit 414 that is the same as the magnetic force applying unit 414 in the first embodiment.

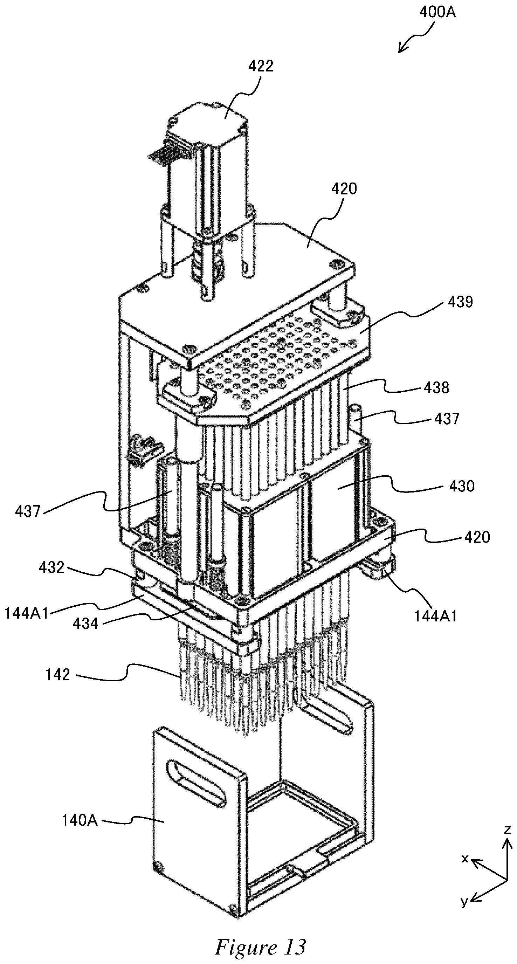

As shown in Figure 12 and 13, the second dispensing unit 400A includes a main support part 410, a sub-support part 420, and a sub-support part moving motor 412. The main support part 410 supports the entire second dispensing unit 400A in a movable manner in the x direction with respect to a moving mechanism 300. The sub-support part 420 is movable in the z direction with respect to the main support part 410. The sub-support part moving motor 412 moves the sub-support part 420 in the z direction. The sub-support part 420 includes a dispensing body (cylinder block) 430, a plurality of plungers 438, and a plunger motor 422. The plurality of plungers 438 are movable in the z direction with respect to the dispensing body 430 so as to allow the plurality of dispensing nozzles 436 to perform suction and discharge. The plunger motor 422 moves the plurality of plungers 438 in the z direction by moving a plunger moving plate 439 in the z direction. The dispensing body 430 is fixed to the sub-support part 420. A control unit 600 controls the operations of the sub-support part moving motor 412 and/or the plunger motor 422.

The attaching mechanism that collectively attaches the plurality of dispensing tips 142 to the plurality of dispensing nozzles 436 will be described. A second dispensing tip rack 140A, a group of the second dispensing tips 142, a mounting plate 144A2, and a mounting plate frame 144A1 are disposed below the dispensing body 430. The group of the second dispensing tips 142 is housed in the second dispensing tip rack 140A at predetermined intervals in the x and y directions. The mounting plate 144A2 has a rectangular shape, and the second dispensing tips 142 are mounted on the mounting plate 144A2 at predetermined intervals in the x and y directions. The mounting plate frame 144A1 encloses at least a portion (three sides of the rectangular shape) of the periphery of the mounting plate 144A2. In the second embodiment, the mounting body 144A includes the mounting plate 144A2 and the mounting body frame 144A1. The mounting body frame 144A1 may be preferably formed into a U shape (square U shape).

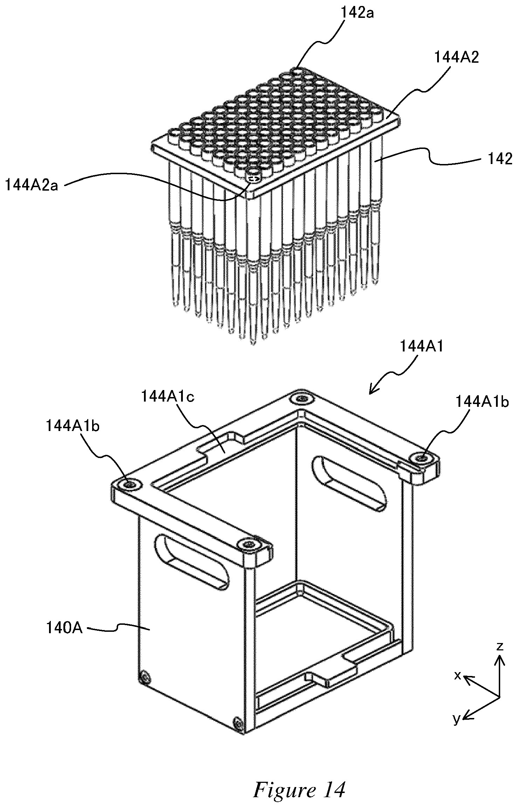

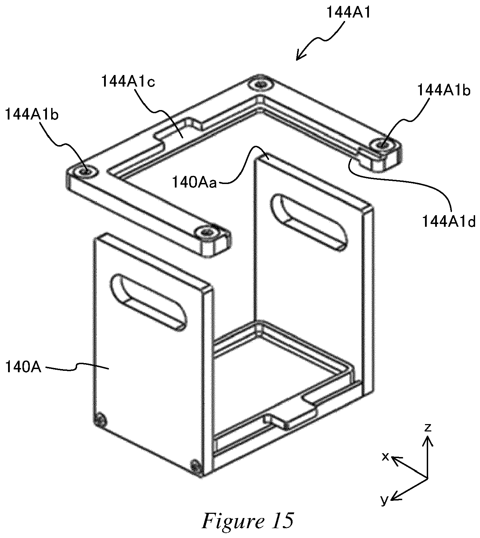

As shown in Figure 14 and 15, the mounting plate frame 144A1 includes one or a plurality of metal bodies (metal disks) 144A1b, an upper recessed portion 144A1c, and a lower recessed portion 144A1d. The upper recessed portion 144A1c houses the peripheral edge portion of the mounting plate 144A2. The lower recessed portion 144A1d houses the upper end portions of the side walls of the second dispensing tip rack 140A. The one or the plurality of metal bodies 144A1b are fixed to the mounting body frame 144A1. The plurality of metal bodies 144A1b are preferably disposed in such a way as to surround the plurality of dispensing tips 142 mounted on the mounting plate 144A2 as shown in Figure 12. The one or the plurality of metal bodies 144A1b are preferably disposed at the corner portion and/or the distal end portion of the mounting body frame 144A1. The one or the plurality of metal bodies 144A1b are preferably housed in one or a plurality of recessed portions provided to the mounting body frame 144A1.

The mounting plate 144A2 has a plurality of through holes 144A2a arranged at predetermined intervals in the x and y directions and penetrating through the mounting plate 144A2 in the z direction. The outer diameter of an upper end opening portion 142a of each second dispensing tip 142 is larger than the inner diameter of each through hole 144A2a of the mounting plate 144A2 and hence, the lower end of the upper end opening portion 142a of the second dispensing tip 142 is mounted at the periphery of the through hole 144A2a. The plurality of dispensing tips 142 may be fixed to the mounting plate 144A2.

The second dispensing tip rack 140A supports the mounting body 144A in which the plurality of dispensing tips 142 are housed. The second dispensing tip rack 140A is not provided with a side wall on the plane (yz plane) perpendicular to the x direction so as to allow the mounting body 144A, in which the plurality of dispensing tips 142 are housed in the x direction, to perform parallel movement in the x direction.

As shown in Figure 16, on the lower side of the dispensing body (cylinder block) 430, the group of the plurality of dispensing nozzles 436 and one or a plurality of attaching magnets 432 are fixed to the sub-support part 420. The plurality of attaching magnets 432 are preferably disposed so as to surround the group of the plurality of dispensing nozzles on the xy plane. The plurality of attaching magnets 432 attract the plurality of metal plates 144A1b of the mounting body 144A.

The attaching mechanism includes the one or the plurality of attaching magnets 432, fixed to the dispensing body 430 (the sub-support part 420), and the one or the plurality of metal bodies 144A1b, fixed to the mounting body 144A.

The operation of attaching the plurality of dispensing tips 142 to the plurality of dispensing nozzles 436 will be described with reference to Figure 16. As shown in Figure 12 and Figure 16(a), the plurality of dispensing tips 142 are housed in the second dispensing tip rack 140A in a mounted state in which the plurality of dispensing tips 142 are mounted on the mounting body 144A. When the group of the plurality of dispensing nozzles 436 of the second dispensing unit 400A descends toward the mounting body 144A from above the mounting body 144A in the mounted state shown in Figure 16(a), as shown in Figure 16(b), the plurality of metal bodies 144A1b fixed to the mounting body 144A are attracted by the plurality of magnet bodies 432, so that an attracted state occurs. In the attracted state shown in Figure 16(b), the plurality of dispensing nozzles 436 are inserted into the upper end opening portions 142a of the plurality of dispensing tips 142, so that the plurality of dispensing tips 142 and the plurality of dispensing nozzles 436 are brought into close contact with each other. When the entire second dispensing unit 400A is caused to ascend in the z direction by the sub-support part moving motor 412 from the state shown in Figure 16(b), as shown in Figures 13 and 16(c), a state is caused in which the second dispensing unit 400A is movable in the x and y directions with the plurality of dispensing tips 142 installed to the second dispensing unit 400A.

In the state shown in Figures 16(c) and 16(d), the weight of the plurality of dispensing tips 142 is supported by the plurality of magnet bodies 432 (the sub-support part 420), disposed proximate to the plurality of dispensing nozzles 436, via the plurality of metal bodies 144A1b of the mounting body 144A instead of being supported by the plurality of dispensing nozzles 436. Therefore, it is sufficient to press-fit the plurality of dispensing nozzles 436 into the upper end opening portions 142a of the plurality of dispensing tips 142 with a relatively small force at a level that allows the plurality of dispensing tips 142 to be brought into close contact with the plurality of dispensing nozzles 436. An elastic member (an O-ring or the like) that comes into contact with the dispensing tip may be preferably provided to the outer peripheral surface of each of the plurality of dispensing nozzles 436.

Next, the removing mechanism that collectively removes the plurality of dispensing tips 142 will be described. As shown in Figure 13 and Figure 16(c), a remover 434 is provided to the lower surface of the dispensing body 430 in such a way as to be movable in the z direction. As will be described later, the remover 434 can collectively remove the plurality of dispensing tips 142 from the plurality of dispensing nozzles 436. The remover 434 has a substantially plate shape, and has a plurality of through holes. The plurality of dispensing nozzles 436 pass through the plurality of through holes of the remover 434, and are exposed beneath the remover 434. The plurality of dispensing nozzles 436 are not integrally formed with the remover 434.

As shown in Figure 13 and Figure 16, the side surface of the dispensing body 430 is provided with a plurality of pressing rods (remover moving mechanism) 437 to press the remover 434 downward, the plurality of pressing rods 437 being movable in the z direction. The plurality of pressing rods 437 may preferably be rod actuators. The lower ends of the plurality of pressing rods 437 are fixed to the remover 434 and hence, the plurality of pressing rods 437 and the remover 434 move upward and downward as an integral body with respect to the sub-support body 420. The control unit 600 controls the moving operation of the plurality of pressing rods 437. As shown in Figure 13, the lower end portions of the plurality of pressing rods 437 are disposed in the vicinity of the plurality of attaching magnets 432 (attaching mechanism), and press the remover 434 downward. The removing mechanism includes the remover 434, the plurality of pressing rods 437, and the mounting body 144A. The remover 434 applies a force to the mounting body 144A in the direction in which the plurality of dispensing tips 142 and the mounting body 144A separate from the dispensing body 430.

The operation of the removing mechanism in removing the plurality of dispensing tips from the plurality of dispensing nozzles will be described with reference to Figure 16. As shown in Figure 16(c), the plurality of dispensing tips 142 are attached to the group of the plurality of dispensing nozzles 436 in a held state in which the plurality of dispensing tips 142 are held by the mounting body 144A. When the control unit 600 moves the plurality of pressing rods 437 downward in the held state shown in Figure 16(c), the remover 434 is also moved downward, so that the lower surface of the remover 434 presses the upper surface of the mounting body 144A and/or the upper end surfaces of the plurality of dispensing tips 142. When the force caused by such pressing exceeds the force of the plurality of attaching magnets 432 attracting the plurality of metal bodies 144A1b, as shown in Figure 16(d), the mounting body 144A on which the plurality of dispensing tips 142 are mounted is removed from the plurality of dispensing nozzles 436.

In the second embodiment, the mounting body 144A includes the mounting plate 144A2 and the mounting body frame 144A1 and hence, the operator can separate the mounting body frame 144A1 from the mounting plate 144A2. After such separation, the mounting plate 144A2 on which the plurality of used dispensing tips 142 are mounted may be disposed of, and the mounting body frame 144A1 may be attached to a mounting plate 144A2 on which a plurality of unused dispensing tips 142 are mounted. With such a configuration, it is possible to reuse the mounting body frame 144A1 including relatively expensive metal bodies 144A1b.

### (Third embodiment)

A specimen processing system according to a third embodiment of the present invention differs from the specimen processing system 1000 according to the first embodiment only with respect to the second dispensing unit, and the configurations and the operations of other components of the specimen processing system according to the third embodiment of the present invention are substantially identical to those of the specimen processing system 1000 and hence, drawings and the description of the configurations and the operations of the other components will be omitted.

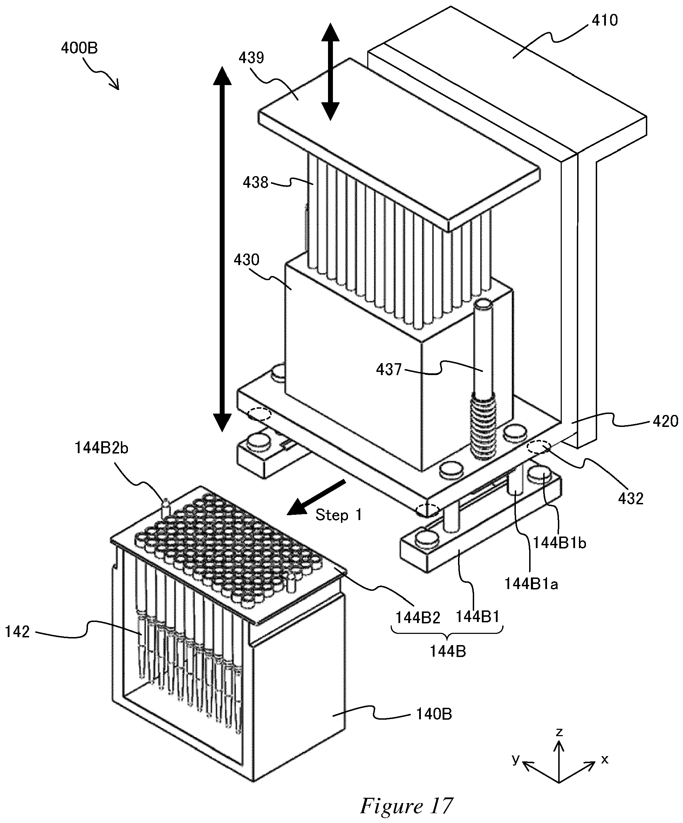

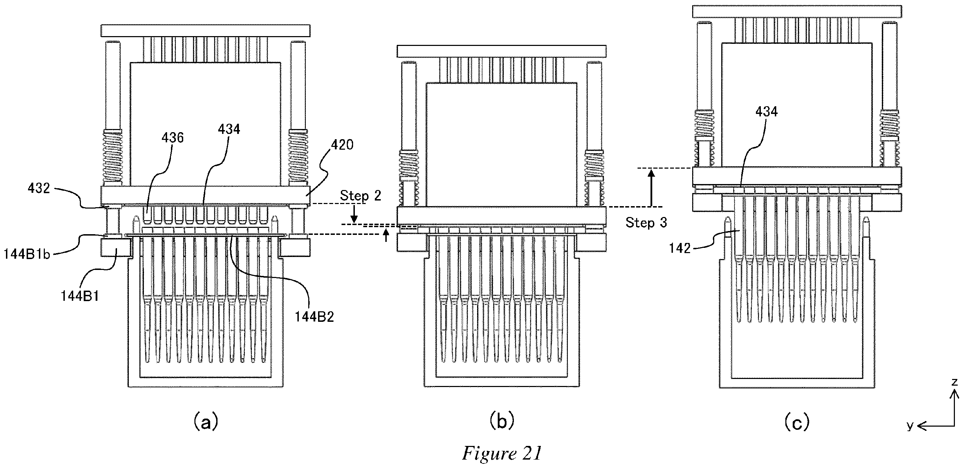

A second dispensing unit 400B according to the third embodiment will be described with reference to Figure 17 to Figure 22. Components of the second dispensing unit 400B identical to the corresponding components of the second dispensing unit 400 are given the same reference symbols as the corresponding components of the second dispensing unit 400. The second dispensing unit 400B includes a plurality of dispensing nozzles 436 that correspond to a PCR plate or a microplate having a plurality of wells (Figure 21(a)). As will be described later, the second dispensing unit 400B includes an attaching mechanism and a removing mechanism, the attaching mechanism collectively attaching a plurality of dispensing tips 142, arranged at predetermined intervals in the x and y directions, to the plurality of dispensing nozzles 436, the removing mechanism collectively removing the plurality of dispensing tips 142, arranged at the predetermined intervals in the x and y directions, from the plurality of dispensing nozzles 436. The second dispensing unit 400B may preferably include 96 dispensing nozzles 436 arranged at substantially equal intervals in the x and y directions in the same manner as Figure 5A. In the third embodiment, the second dispensing unit 400B includes a magnetic force applying unit 414 that is the same as the magnetic force applying unit 414 in the first embodiment.

As shown in Figure 17, the second dispensing unit 400B includes a main support part 410, a sub-support part 420, and a sub-support part moving motor (not shown in the drawing). The main support part 410 supports the entire second dispensing unit 400B in a movable manner in the x direction with respect to a moving mechanism 300. The sub-support part 420 is movable in the z direction with respect to the main support part 410. The sub-support part moving motor moves the sub-support part 420 in the z direction. The sub-support part 420 includes a dispensing body (cylinder block) 430, a plurality of plungers 438, and a plunger motor (not shown in the drawing). The plurality of plungers 438 are movable in the z direction with respect to the dispensing body 430 so as to allow the plurality of dispensing nozzles 436 to perform suction and discharge. The plunger motor moves the plurality of plungers 438 in the z direction by moving a plunger moving plate 439 in the z direction. The dispensing body 430 is fixed to the sub-support part 420. A control unit 600 controls the operations of the sub-support part moving motor and/or the plunger motor.

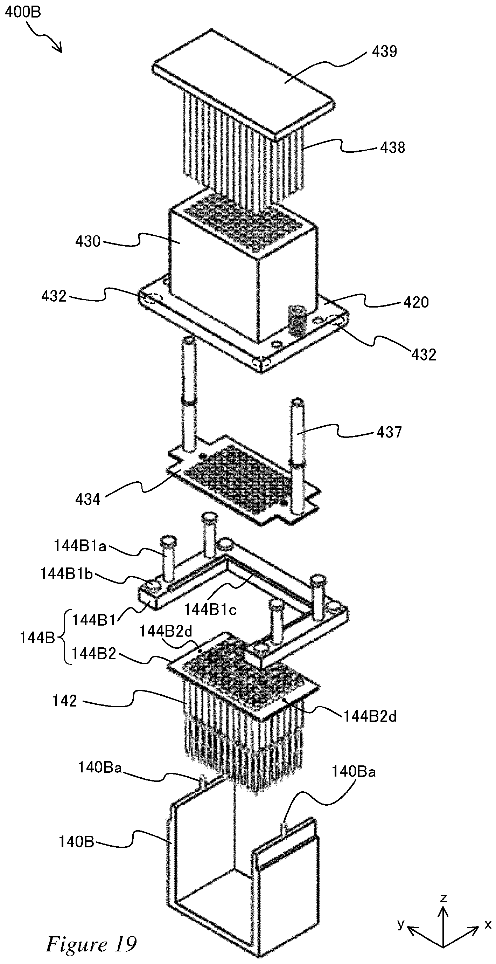

The attaching mechanism that collectively attaches the plurality of dispensing tips 142 to the plurality of dispensing nozzles 436 will be described. A second dispensing tip rack 140B, a group of the second dispensing tips 142, a mounting plate 144B2, and a mounting plate frame 144B1 are disposed below the dispensing body 430. The group of the second dispensing tips 142 is housed in the second dispensing tip rack 140B at predetermined intervals in the x and y directions. The mounting plate 144B2 has a rectangular shape, and the second dispensing tips 142 are mounted on the mounting plate 144B2 at predetermined intervals in the x and y directions. The mounting plate frame 144B1 encloses at least a portion (three sides) of the periphery of the mounting plate 144B2. In the third embodiment, a mounting body 144B includes the mounting plate 144B2 and the mounting body frame 144B1. The mounting body frame 144B1 may be preferably formed into a U shape (square U shape) as shown in Figure 19.

As shown in Figure 19, the mounting plate frame 144B1 includes one or a plurality of metal bodies (metal disks) 144B1b, an upper recessed portion 144B1c, and a plurality of guide rods 144B1a. The upper recessed portion 144B1c houses the peripheral edge portion of the mounting plate 144B2. The plurality of guide rods 144B1a protrude upward (in the Z direction) from the mounting body frame 144B1. The one or the plurality of metal bodies 144B1b are fixed to the mounting body frame 144B1. The upper ends of the guide rods 144B1a are attached to the sub-support part 420 such that the guide rods 144B1a are movable in the z direction through openings provided to the sub-support part 420. The lower ends of the guide rods 144B1a are fixed to the mounting body frame 144B1 and hence, the mounting body frame 144B1 is suspended from the sub-support body 420, fixed to the dispensing body 430, in a movable manner in the z direction.

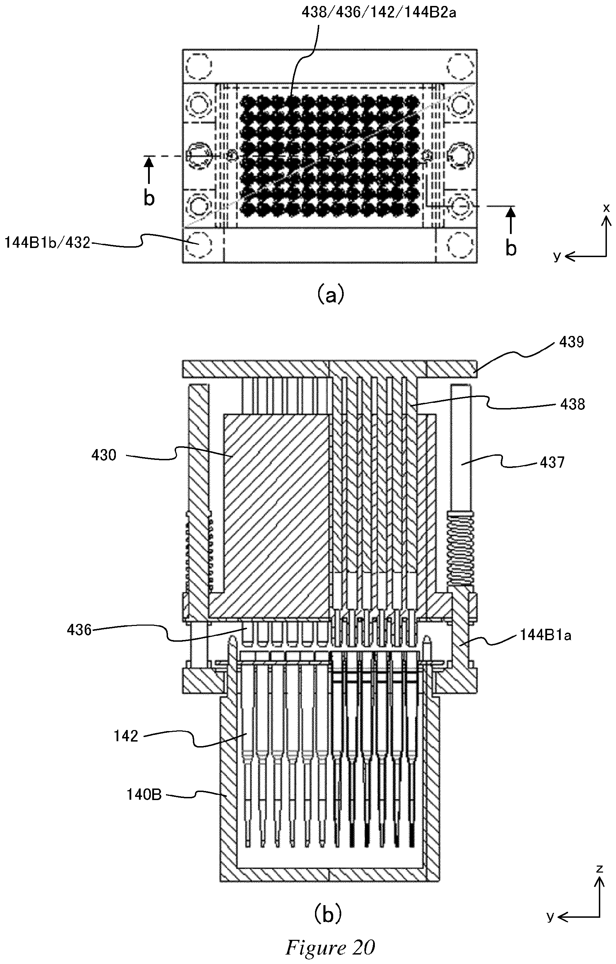

The plurality of metal bodies 144B1b are preferably disposed in such a way as to surround the plurality of dispensing tips 142 mounted on the mounting plate 144A2 as shown in Figure 20(a). The one or the plurality of metal bodies 144B1b are preferably disposed at the corner portion and/or the distal end portion of the mounting body frame 144B1. The one or the plurality of metal bodies 144B1b are preferably housed in one or a plurality of recessed portions provided to the mounting body frame 144B1.

The mounting plate 144B2 has a plurality of through holes 144B2a arranged at predetermined intervals in the x and y directions and penetrating through the mounting plate 144B2 in the z direction. The outer diameter of an upper end opening portion 142a of each second dispensing tip 142 is larger than the inner diameter of each through hole 144B2a of the mounting plate 144B2 and hence, the lower end of the upper end opening portion 142a of the second dispensing tip 142 is mounted at the periphery of the through hole 144B2a. The plurality of dispensing tips 142 may be fixed to the mounting plate 144B2. The mounting plate 144B2 has a pair of second through holes 144B2d that house protruding portions 140Ba of the second dispensing tip rack 140B.

The second dispensing tip rack 140B supports the mounting plate 144B2 in which the plurality of dispensing tips 142 are housed. The second dispensing tip rack 140B is not provided with a side wall on the plane (yx plane) perpendicular to the x direction so as to allow the mounting plate frame 144B1 to perform parallel movement in the x direction as an integral body with the second dispensing unit 400B. The second dispensing tip rack 140B includes the pair of protruding portions (pins) 140Ba extending in the z direction from the upper end portions of the side walls of the second dispensing tip rack 140B. By inserting the protruding portions 140Ba into the second through holes 144B2d (Figure 19), the mounting plate 144B2 is positioned with respect to the second dispensing tip rack 140A.

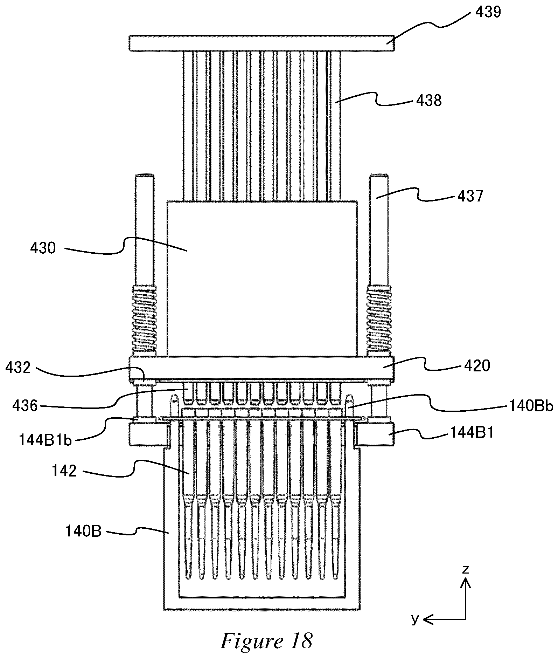

As shown in Figure 18, on the lower side of the dispensing body (cylinder block) 430, the group of the plurality of dispensing nozzles 436 and one or a plurality of attaching magnets 432 are fixed to the sub-support part 420. The plurality of attaching magnets 432 are preferably disposed in such a way as to surround the group of the plurality of dispensing nozzles 436 on the xy plane. The plurality of attaching magnets 432 attract the plurality of metal plates 144B1b of the mounting body 144B.

The attaching mechanism includes the one or the plurality of attaching magnets 432, fixed to the dispensing body 430, and the one or the plurality of metal bodies 144B1b, fixed to the mounting body 144B.

The operation of attaching the plurality of dispensing tips 142 to the plurality of dispensing nozzles 436 will be described with reference to Figures 17 and 21. As shown in Figure 17, the plurality of dispensing tips 142 are housed in the second dispensing tip rack 140B in a mounted state in which the plurality of dispensing tips 142 are mounted on the mounting body 144B. In the mounted state shown in Figure 17, as shown by an arrow for Step1, the group of the plurality of dispensing nozzles 436 of the second dispensing unit 400B is moved toward the mounting body 144B from the x direction by the moving mechanism 300. When the mounting plate 144B2 is housed in the mounting plate frame 144B1, as shown in Figure 21(a), a facing state occurs in which the plurality of dispensing nozzles 436 face the upper end opening portions of the plurality of dispensing tips 142 in the z direction.

When the control unit 600 operates a sub-support part moving motor 412 to cause the sub-support body 420 to descend from the facing state shown in Figure 21(a) until the plurality of magnet bodies 432 and the plurality of metal bodies 144B1b come into contact with each other in Step2, the state shown in Figure 21(b) occurs. The state shown in Figure 21(b) is an attracted state in which the plurality of magnet bodies 432 attract the plurality of metal bodies 144B1b. In such an attracted state, the plurality of dispensing nozzles 436 are inserted into the upper end opening portions 142a of the plurality of dispensing tips 142, so that the plurality of dispensing tips 142 and the plurality of dispensing nozzles 436 are brought into close contact with each other. When the entire second dispensing unit 400B is caused to ascend in the z direction by the sub-support part moving motor 412 as shown in Figure 21(c) from the state shown in Figure 21(b) in Step3, the second dispensing unit 400B becomes movable in a state in which the plurality of dispensing tips 142 are installed on the plurality of dispensing nozzles 436.

The weight of the plurality of dispensing tips 142 can be supported by the plurality of magnet bodies 432 (the sub-support body 420), disposed proximate to the plurality of dispensing nozzles 436, via the plurality of metal bodies 144B1b of the mounting body 144B instead of being supported by the plurality of dispensing nozzles 436. Therefore, it is sufficient to press-fit the plurality of dispensing nozzles 436 into the upper end opening portions 142a of the plurality of dispensing tips 142 with a relatively small force at a level that allows the plurality of dispensing tips 142 to be brought into close contact with the plurality of dispensing nozzles 436. An elastic member (an O-ring or the like) that comes into contact with the dispensing tip may be preferably provided to the outer peripheral surface of each of the plurality of dispensing nozzles 436.

Next, the removing mechanism that collectively removes the plurality of dispensing tips 142 will be described. As shown in Figure 19, a remover 434 is provided to the lower surface of the dispensing body 430 in such a way as to be movable in the z direction. As will be described later, the remover 434 can collectively remove the plurality of dispensing tips 142 from the plurality of dispensing nozzles 436. The remover 434 has a substantially plate shape, and has a plurality of through holes. The plurality of dispensing nozzles 436 pass through the plurality of the through holes of the remover 434 and are exposed beneath the remover 434. The plurality of dispensing nozzles 436 are not integrally formed with the remover 434.

As shown in Figure 17 and Figure 19, the side surface of the dispensing body 430 is provided with a plurality of pressing rods (remover moving mechanism) 437 to press the remover 434 downward, the plurality of pressing rods 437 being movable in the z direction. The plurality of pressing rods 437 may preferably be rod actuators. The lower ends of the plurality of pressing rods 437 are fixed to the remover 434 and hence, the plurality of pressing rods 437 and the remover 434 move upward and downward as an integral body. The control unit 600 controls the extending and contracting operation of the plurality of pressing rods 437. As shown in Figure 17, the lower end portions of the plurality of pressing rods 437 are disposed in the vicinity of the plurality of attaching magnets 432 (attaching mechanism), and press the remover 434 downward. The removing mechanism includes the remover 434, the plurality of pressing rods 437, and the mounting body 144B. The remover 434 applies a force to the mounting body 144B in the direction in which the plurality of dispensing tips 142 and the mounting body 144B separate from the dispensing body 430.

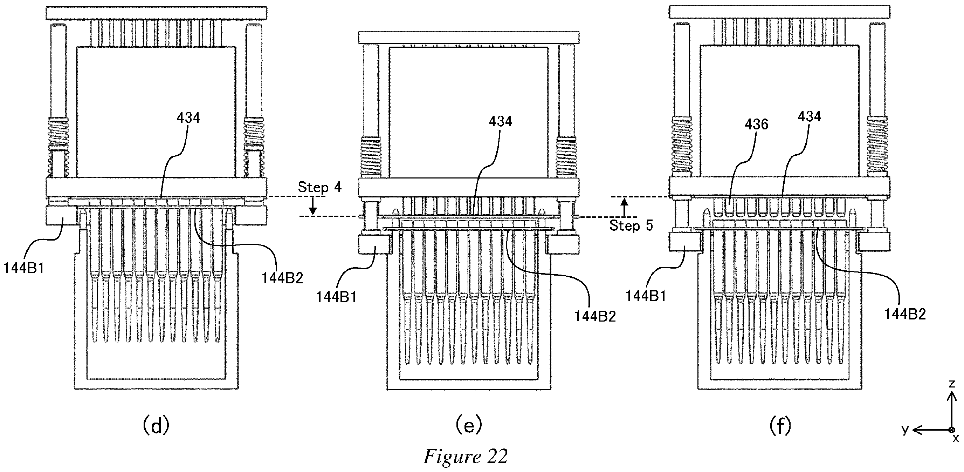

The operation of the removing mechanism in removing the plurality of dispensing tips from the plurality of dispensing nozzles will be described with reference to Figure 22. As shown in Figure 22(d), the plurality of dispensing tips 142 are attached to the group of the plurality of dispensing nozzles 436 with the plurality of dispensing tips 142 held by the mounting plate 144B2 (the mounting body 144B). When the control unit 600 moves the plurality of pressing rods 437 downward in such a state as shown in Step4, the remover 434 is also moved downward, so that the lower surface of the remover 434 presses the upper surfaces of the mounting body 144B (both the mounting plate frame 144B1 and the mounting plate 144B2) and/or the upper end surfaces of the plurality of dispensing tips 142.

When the force caused by such pressing exceeds the attracting force between the plurality of attaching magnets 432 and the plurality of metal bodies 144B1b, as shown in Figure 22(e), the mounting plate frame 144B1 and the mounting plate 144B2 on which the plurality of dispensing tips 142 are mounted are removed from the plurality of dispensing nozzles 436. It is preferable that the mounting plate frame 144B1 move downward due to the dead weight of the mounting plate frame 144B1 in the state shown in Figure 22(c), so that the mounting plate frame 144B1 and the mounting plate 144B2 separate from each other in the z direction. In the state shown in Figure 22(e), the mounting plate 144B2 is separated from the mounting plate frame 144B1 in the z direction and hence, by horizontally moving the second dispensing unit 400B in the x direction, it is possible to obtain the state shown in Figure 17. Even in the case in which the mounting plate frame 144B1 and the mounting plate 144B2 are not separated from each other in the z direction in the state shown in Figure 22(c), by moving the second dispensing unit 400B in the x direction, it is possible to pull out the mounting plate frame 144B1, held by the second dispensing unit 400B, from the mounting plate 144B2, held by the second dispensing tip rack 140B.

In the third embodiment, the mounting body 144B includes the mounting plate 144B2 and the mounting body frame 144B1. By moving the second dispensing unit 400B in the horizontal direction (X direction), it is possible to separate the mounting body frame 144B1 from the mounting plate 144B2 without manual intervention. After such separation, only the mounting plate 144B2 on which the plurality of used dispensing tips 142 are mounted may be disposed of, and the mounting body frame 144B1 may be attached, from the horizontal direction without manual intervention, to a mounting plate 144B2 on which a plurality of unused dispensing tips 142 are mounted. With such a configuration, it is possible to reuse the mounting body frame 144A2 including relatively expensive metal bodies 144B1b while contamination of the specimen is avoided.

### Reference Signs List

- 1000: specimen processing and measuring system
- 100: base
- 142: dispensing tip
- 144: mounting body (catch plate)
- 144a: through hole
- 144b: metal body (metal disk)
- 144c: recessed portion
- 120: movable stage
- 200: first dispensing unit
- 205: dispensing nozzle (first dispensing nozzle)
- 210: pitch conversion mechanism
- 300: moving mechanism
- 400: second dispensing unit (dispensing device)
- 432: attaching magnet
- 434: remover
- 436: dispensing nozzle (second dispensing nozzle)
- 438: O-ring
- 414: magnetic force applying unit
- 414b: comb section
- 414c: comb magnet
- 500: first dispensing tip housing unit
- 600: control unit
- 400A: second dispensing unit (dispensing device)
- 144A: mounting body
- 144A1: mounting plate frame
- 144A2: mounting plate
- 400B: second dispensing unit (dispensing device)
- 144B: mounting body
- 144B1: mounting plate frame
- 144B2: mounting plate

## Claims

1. A dispensing device including a plurality of dispensing nozzles arranged at a predetermined interval in a first direction and a second direction, the dispensing device comprising:
a dispensing body configured to support the plurality of dispensing nozzles;
a mounting body configured to allow a plurality of dispensing tips to be mounted on the mounting body at the predetermined interval in the first direction and the second direction;
an attaching mechanism configured to attach the mounting body, on which the plurality of dispensing tips are mounted, to the dispensing body to install the plurality of dispensing tips on the plurality of dispensing nozzles;
a removing mechanism configured to remove the mounting body, on which the plurality of dispensing tips are mounted, from the dispensing body; and
a control unit configured to control operations of the plurality of dispensing nozzles, the attaching mechanism, and the removing mechanism.

2. The dispensing device according to claim 1, wherein
the mounting body includes a mounting plate and a mounting plate frame, the plurality of dispensing tips being mounted on the mounting plate at the predetermined interval in the first direction and the second direction, the mounting plate frame enclosing at least a portion of a periphery of the mounting plate.

3. The dispensing device according to claim 2, wherein
the mounting plate has a rectangular shape, and the mounting plate frame encloses three sides of the rectangular shape.

4. The dispensing device according to claim 2 or 3, wherein
the attaching mechanism includes one or a plurality of attaching magnets and one or a plurality of metal bodies, the one or the plurality of attaching magnets being provided to one of the mounting plate frame and the dispensing body, the one or the plurality of metal bodies being provided to another of the mounting frame and the dispensing body.

5. The dispensing device according to any one of claims 2 to 4, wherein
the mounting plate frame is suspended from the dispensing body.

6. The dispensing device according to any one of claims 1 to 5, wherein
the attaching mechanism includes one or a plurality of attaching magnets and one or a plurality of metal bodies, the one or the plurality of attaching magnets being provided to one of the mounting body and the dispensing body, the one or the plurality of metal bodies being provided to another of the mounting body and the dispensing body.

7. The dispensing device according to claim 4 or 6, wherein
the plurality of attaching magnets are disposed to surround one of the plurality of dispensing tips and the plurality of dispensing nozzles, and
the plurality of metal bodies are disposed to surround another of the plurality of dispensing tips and the plurality of dispensing nozzles.

8. The dispensing device according to any one of claims 1 to 3, wherein
the attaching mechanism includes one or a plurality of first magnets and one or a plurality of second magnets, the one or the plurality of first magnets being provided to one of the mounting body and the dispensing body, the one or the plurality of second magnets being provided to another of the mounting body and the dispensing body.

9. The dispensing device according to claim 8, wherein
the plurality of first magnets are disposed to surround one of the plurality of dispensing tips and the plurality of dispensing nozzles, and
the plurality of second magnets are disposed to surround another of the plurality of dispensing tips and the plurality of dispensing nozzles.

10. The dispensing device according to any one of claims 1 to 9, wherein
the removing mechanism includes a remover and a remover moving mechanism, the remover being configured to apply a force to the mounting body in a direction in which the mounting body separates from the dispensing body, the remover moving mechanism being configured to move the remover.

11. The dispensing device according to claim 10, wherein
when the remover presses an upper surface of the mounting body and/or upper end surfaces of the plurality of dispensing tips, the plurality of dispensing tips are removed from the plurality of dispensing nozzles.

12. The dispensing device according to any one of claims 1 to 11, comprising
a magnetic force applying unit configured to exert a magnetic force on an inside of each of the plurality of dispensing tips in a state in which the plurality of dispensing tips mounted on the mounting body are attached to the plurality of dispensing nozzles.

13. The dispensing device according to claim 12, wherein
the magnetic force applying unit includes
a plurality of comb sections including a plurality of protruding pieces,
a plurality of comb magnets disposed on each of the plurality of protruding pieces, and
a comb moving mechanism configured to move the plurality of comb sections in a direction in which the plurality of comb sections are inserted into or pulled out from gaps between the plurality of dispensing nozzles.

14. The dispensing device according to any one of claims 1 to 13, wherein
each of the plurality of dispensing nozzles includes an elastic member that comes into contact with each of the plurality of dispensing tips.

15. A specimen processing and measuring device including a first dispensing unit, a processing unit, a heating unit, a measuring unit, and a second dispensing unit, the first dispensing unit being configured to dispense a parent specimen into an aliquot container from a parent specimen container, the processing unit being configured to extract a nucleic acid from an aliquot in the aliquot container, the heating unit being configured to repeat heating and cooling to amplify the nucleic acid extracted, the measuring unit being configured to measure the nucleic acid amplified, the second dispensing unit being configured to dispense a reagent or a solution into at least the processing unit, wherein
the second dispensing unit is the dispensing device according to any one of claims 1 to 14.
